# FASCICULE DE BREVET EUROPEEN

(11) **EP 0 723 098 B1**
(45) Date de publication et mention de la délivrance du brevet: **26.04.2000**
(21) Numéro de dépôt: 96400100.2
(22) Date de dépôt: 16.01.1996
(51) Int. Cl.: F16J 15/12, F16J 15/02

(54) **Joint d'étanchéité ultrasouple à double jacquette**
Ultraweiche Dichtung mit Doppelummantelung
Ultra-soft seal with double cover jacket

(30) Priorité: 18.01.1995 FR 9500509
(43) Date de publication de la demande: 24.07.1996
(73) Titulaire: COMMISSARIAT A L'ENERGIE ATOMIQUE, 75015 Paris (FR)
(72) Inventeur: De Villepoix, Raymond, F-26290 Donzere (FR); Rouaud, Christian, F-07700 Bourg Saint Andeol (FR)
(74) Mandataire: Dubois-Chabert, Guy

(56) Documents cités:
- DE-U- 9 113 953
- FR-A- 2 692 019

## Description

### Domaine de l'invention

L'invention concerne l'étanchéité entre deux volumes où règnent des pressions et des températures différentes délimitées par des pièces fixes les une par rapport aux autres. On utilise un tel joint sur les turbopropulseurs équipant les avions civils et militaires, en particulier dans des endroits d'accès difficile et pour lesquels l'entretien et la maintenance sont délicats à effectuer par le manque d'espace ou d'accessibilité.

### Art antérieur et problème posé

Il est largement connu d'utiliser des joints d'étanchéité pour séparer deux volumes dans lesquels se trouvent des fluides différents, à des pressions et des températures différentes, les pièces délimitant ces volumes étant fixes les unes par rapport aux autres. Dans certains propulseurs, c'est le cas des circuits d'air de pressurisation où l'air chaud sous pression, prélevé au niveau des moteurs et avant de faire son office, circule dans des endroits confinés peu accessibles. Pour ces endroits, les opérations de montage d'entretien et de maintenance peuvent être très difficiles du fait du manque d'espace et/ou d'accessibilité pour l'opérateur. De plus, ce dernier ne peut généralement pas bénéficier d'un outillage d'appoint, du fait de ces difficultés.

Ce type de joint doit assurer une certaine étanchéité entre deux éléments de conduit, qui sont généralement de section rectangulaire, le montage devant être effectué avec un serrage très faible. En outre, on doit pouvoir obtenir un écrasement variable du joint sur plusieurs millimètres, pour que l'approche, l'emboîtement et le verrouillage des éléments du conduit puissent être réalisés à la main, sans utiliser d'outillages mécaniques spéciaux.

De plus, il est important de tenir compte du fait que l'écrasement du joint peut ne pas être régulier et peut évoluer dans le temps, durant l'utilisation du dispositif. En effet, suite à des dilatations différentielles thermiques des conduits, la variation du joint sur ce périmètre peut varier de plusieurs millimètres.

D'une part, par la demande de brevet français, publiée sous le numéro 2 692 019, on connaît un joint flexible à jaquette utilisé sur les turbopropulseurs d'avions. Ce joint permet d'assurer à la fois l'étanchéité statique entre un milieu intérieur et un milieu extérieur et, d'autre part, l'étanchéité dynamique entre deux parties du milieu intérieur.

Il est constitué principalement d'une âme centrale sous la forme d'un ressort entouré de trois enveloppes, dont la deuxième constituant, au moyen d'une jaquette, assure l'étanchéité dynamique entre l'élément mobile et l'élément fixe. L'enveloppe extérieure assure l'étanchéité statique entre les deux parties de l'élément fixe.

L'extrémité de la jaquette est en léger contact avec l'élément mobile et permet d'assurer, de part et d'autre de la jaquette, les deux milieux en contact avec l'élément mobile.

Grâce à l'extrémité flexible de la jaquette, ce type de joint est construit pour assurer une étanchéité dynamique entre une ou plusieurs pièces fixes et une ou plusieurs pièces statiques. Il n'est pas conçu pour être utilisé dans le cas d'une étanchéité statique à assurer dans des endroits d'accessibilité limitée et où le montage d'un joint est très délicat, notamment concernant le positionnement.

L'objet de l'invention est de remédier à cet inconvénient en proposant un joint entièrement statique pouvant être monté dans des endroits peu accessibles à un monteur et ne nécessitant pas d'outillage spécial.

### Résumé de l'invention

A cet effet, l'objet principal de l'invention est un joint d'étanchéité statique ultrasouple, torique, destiné à assurer l'étanchéité entre deux milieux où règnent des températures et des pressions différentes, ces milieux étant délimités tous les deux par deux parois séparées d'un espace de largeur connue, le joint comprenant :
- une enveloppe rigide interne ;
- une bande souple de largeur déterminée, plus grande que la largeur dudit espace, refermée sur elle-même pour former elle-même un anneau et constituée de deux éléments, un extérieur et un intérieur ayant chacune une partie centrale bombée pour entourer chacun de leur côté une moitié de l'enveloppe rigide interne et se rejoindre à leurs extrémités pour constituer les deux extrémités d'étanchéité de la bande souple ; et
- une enveloppe externe rigide entourant et maintenant la bande souple dans sa partie centrale en laissant libres les deux extrémités d'étanchéité de celle-ci, pour permettre à ces dernières des déformations lors de la mise en place du joint dans l'espace par aplatissement de ces deux extrémités d'étanchéité, cette enveloppe externe étant constituée de deux éléments, un extérieur et un intérieur comprenant chacun une partie centrale bombée, chaque élément étant appliqué contre l'élément correspondant de la bande souple.

Ainsi, les difficultés de mise en place, les irrégularités éventuelles du profil des parois du volume à partager peuvent ainsi être compensées par l'aplatissement des extrémités de la bande souple.

De préférence, le joint possède une âme métallique déformable.

Dans une première réalisation, l'âme métallique déformable est de préférence constituée par un ressort métallique.

De préférence, la première enveloppe métallique interne complète cette réalisation en entourant l'âme métallique déformable.

Selon une deuxième réalisation, l'âme métallique est constituée d'un jonc plein, métallique et déformable.

On utilise de préférence un renfort extérieur et/ou un renfort intérieur appliqué à l'extérieur de l'enveloppe extérieure.

### Liste des figures

L'invention, ses différentes réalisations, ses avantages et toutes ses caractéristiques techniques, seront mieux comprises à la lecture de la description suivante, qui est accompagnée de cinq figures, représentant respectivement :
- figure 1, en coupe, le joint selon l'invention dans sa première réalisation ;
- figure 2, en coupe, le joint de la figure 1 installé entre deux pièces, dans le cadre de son utilisation ;
- figure 3, en coupe, le joint selon l'invention dans une deuxième réalisation ; et
- figure 4, en coupe, le joint selon l'invention, complété de deux éléments supplémentaires.

### Description détaillée de plusieurs réalisations

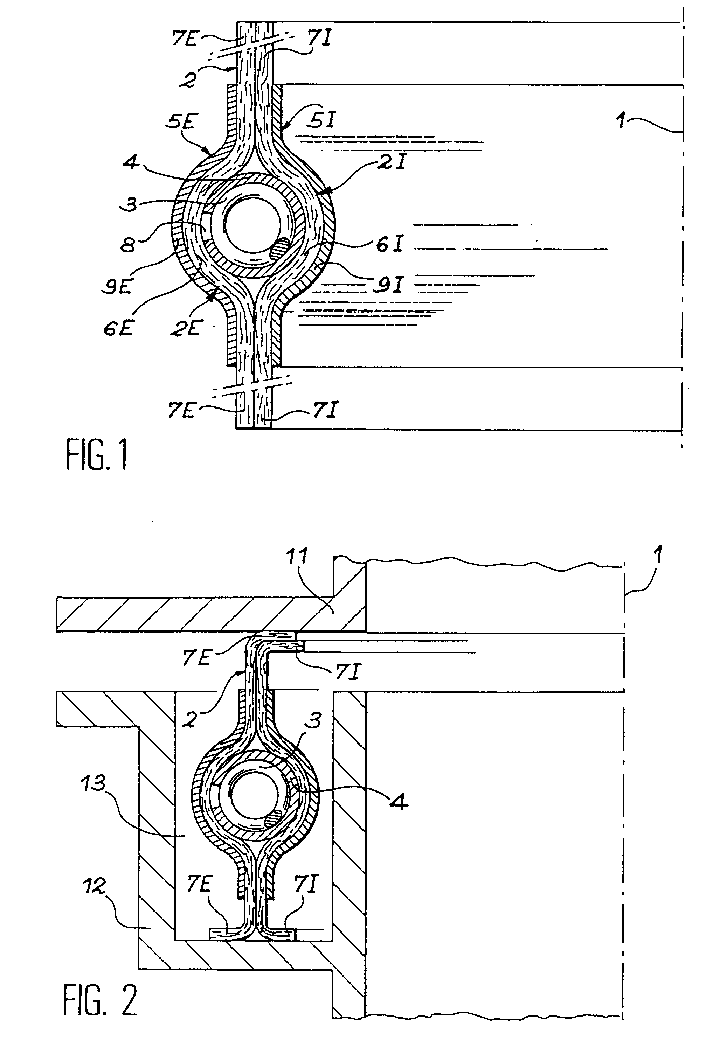

En référence à la figure 1 représentant la première réalisation du joint, ce dernier possède principalement deux éléments de joint qui sont deux bandes souples, une bande souple intérieure 2I et une bande souple extérieure 2E. Ces deux bandes souples 2I et 2E sont accolées l'une contre l'autre pour former un anneau dont le centre est symbolisé par l'axe longitudinal 1 qui est également l'axe de révolution du joint. Les extrémités respectives 7I et 7E de ces deux bandes souples 2I et 2E se rejoignent, tandis que leurs parties centrales respectives 6I et 6E sont écartées et bombées. Les deux extrémités 7I et 7E des bandes souples 2I et 2E s'étendent parallèlement à l'axe longitudinal du joint 1. La caractéristique essentielle de cette bande 2 ainsi constituée est sa souplesse et sa résistance aux hautes températures. Dans ce but, cette bande souple 2 peut être constituée de fibres métalliques souples, de tissu ou grillage fin, ou plus généralement, de tissu, fibres ou feutre, en matière minérale ou synthétique.

Cette forme est destinée à contenir une âme métallique centrale 3 se présentant par exemple sous la forme d'un ressort hélicoïdal à spires jointives. Cette âme centrale métallique est donc déformable et sert d'ossature générale au joint.

Dans cette réalisation, elle est entourée d'une enveloppe interne 4, de préférence métallique. Cette dernière entoure donc l'âme 3 pour lisser les aspérités de celle-ci et faciliter les opérations de déformations du joint. Elle peut, en outre, présenter une section en forme de C non fermé, laissant donc apparaître une ouverture 8 sur le côté.

Les bandes souples intérieure 21 et extérieure 2E formant la bande souple 2 entourent donc cet ensemble constitué de l'âme 3 et de l'enveloppe métallique interne 4. Les parties bombées 6I et 6E entourent donc l'enveloppe métallique interne 4.

Un dernier élément du joint est une enveloppe externe rigide constituée d'un élément intérieur SI et d'un élément extérieur SE. Ces derniers entourent donc respectivement les bandes souples intérieure 2I et extérieure 2E par une partie centrale bombée 9I et 9E. On note que les extrémités de ces deux éléments intérieur SI et extérieur 5E sont plus courtes que les extrémités respectives 7I et 7E des bandes souples 2I et 2E, de manière à laisser ces extrémités libres et permettre l'utilisation de leur souplesse pour effectuer l'étanchéité désirée.

L'enveloppe rigide interne 4 et les deux éléments 5E et SI de l'enveloppe rigide externe sont de préférence métalliques et constituées, plus particulièrement, d'un métal laminable couramment utilisé, tel que l'aluminium, l'argent, le cuivre, le nickel, l'acier inoxydable ou l'inconel, résistant aux conditions de fonctionnement.

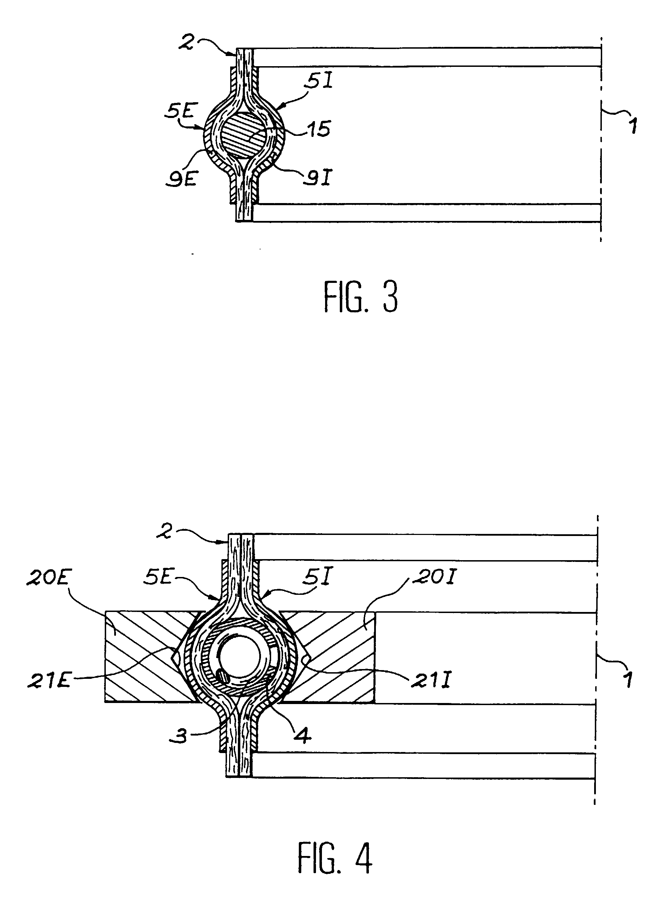

En référence à la figure 2, on comprend mieux comment le joint selon l'invention est disposé ou mis en place dans le logement 13 ou l'endroit où il doit être installé. Il est en fait placé entre deux pièces fixes 11 et 12 qui sont de révolution autour de l'axe 1 du joint. La pièce fixe 12 forme un logement 13 torique dans lequel le joint est globalement placé. Une fois le joint mis en place, ces extrémités de frottement, c'est-à-dire les extrémités d'étanchéité intérieures 7I et extérieures 7E sont recourbées car la distance séparant les parois de la première pièce fixe 11 du fond de la cavité 13 est plus courte que la distance séparant ces extrémités d'étanchéité 7E et 7I. La souplesse du matériau utilisé permet cet état de fait.

On peut remarquer que les extrémités supérieures sont recourbées toutes les deux dans le même sens, c'est-à-dire vers l'intérieur du joint, tandis que les extrémités inférieures sont recourbées chacune dans un sens contraire. Ceci est un exemple de positionnement de ce joint.

L'écrasement de ces extrémités réalise l'étanchéité entre l'intérieur d'un conduit formé par les volumes intérieurs de pièces fixes délimitées par leurs parois respectives et centré autour de l'axe longitudinal 1, et l'extérieur de ce conduit. Le joint peut ainsi empêcher un fluide chaud et sous pression de s'échapper d'une telle canalisation. Suivant les imperfections de planéité de ces deux pièces fixes 11 et 12 constituant des brides et selon les dilatations différentielles de celles-ci, les extrémités d'étanchéité 7I et 7E du joint sont plus ou moins écrasées, mais sont toujours en contact avec les surfaces en vis-à-vis de ces pièces.

En référence à la figure 3, le joint qui y est représenté est une variante du premier joint selon l'invention. Il utilise les mêmes éléments extérieurs, c'est-à-dire une enveloppe externe rigide constituée de deux éléments, un élément intérieur 51 et un élément extérieur 5E. Par contre, l'âme métallique 3 et l'enveloppe interne 4 du joint de la figure 1 sont remplacées par une âme métallique pleine constituée de préférence par un jonc plein métallique 15. Cette solution est de préférence retenue lorsque le diamètre extérieur des parties bombées 9I et 9E de l'enveloppe externe est inférieur ou égal à 3 mm.

En référence à la figure 4, dans toutes ces réalisations du joint selon l'invention, lorsque celui-ci a une forme bombée, et en particulier lorsqu'il est de grande taille, il peut être intéressant d'utiliser un ou deux renforts métalliques autour du joint. Ainsi, un renfort métallique interne 20I constitué d'une couronne présentant une rainure en V 21I sur sa surface extérieure est appliqué par cette dernière sur l'élément intérieur 5I de l'enveloppe rigide externe du joint. De même, un renfort métallique extérieur 20E, constitué d'une couronne et présentant une rainure en V 21E pratiquée sur sa surface interne peut être appliqué par cette dernière contre l'élément extérieur SE de l'enveloppe rigide externe.

On peut également utiliser un de ces renforts indépendamment l'un de l'autre. Ces renforts métalliques 20I et 20E évitent la désolidarisation éventuelle des composants du joint.

Pour certaines réalisations, en particulier pour des joints de grande dimension, il est intéressant d'utiliser les renforts métalliques décrits à la figure 4.

On conçoit qu'avec le joint selon l'invention, une étanchéité statique, c'est-à-dire entre deux pièces fixes l'une par rapport à l'autre puisse être obtenue, compte tenu de certaines difficultés de montage ou d'accessibilité et d'imperfections concernant la planéité des surfaces où doit être réalisée l'étanchéité grâce à l'écrasement des deux extrémités souples du joint.

## Revendications

1. Joint d'étanchéité statique ultrasouple torique destiné à assurer l'étanchéité entre deux milieux où règnent des températures et des pressions différentes, ces deux milieux étant délimités tous deux par deux parois séparées par un espace (13), le joint comprenant au moins :
- une bande souple (2) de largeur déterminée, plus grande que la largeur dudit espace et refermée sur elle-même pour former elle-même un anneau ; et
- une enveloppe externe rigide entourant et maintenant la bande souple (2) dans sa partie centrale (6I, 6E) en laissant libres les deux extrémités d'étanchéité (7I, 7E) de celle-ci, pour permettre à ces dernières des déformations lors de la mise en place du joint dans l'espace (13) par aplatissement de ces deux extrémités d'étanchéité (7I, 7E), caractérisé en ce que la bande souple est constituée de deux éléments, un extérieur (2E) et un intérieur (2I) ayant chacune une partie centrale (6E, 6I) bombée pour entourer chacun de leur côté une moitié d'une enveloppe rigide interne (4) et se rejoindre à leurs extrémités (7I, 7E) pour constituer les deux extrémités d'étanchéité de la bande souple et en ce que l'envelope externe est constituée de deux éléments, un extérieur et un intérieur comprenant chacun une partie centrale bombée, chaque élément étant appliqué contre l'élément correspondant de la bande souple.

2. Joint selon la revendication 1, caractérisé en ce qu'il comprend une âme métallique déformable (3, 15).

3. Joint selon la revendication 2, caractérisé en ce que l'âme métallique est constituée d'un ressort (3).

4. Joint selon la revendication 2, caractérisé en ce que l'enveloppe interne rigide (4) est placée autour de l'âme métallique (3), à l'intérieur de la bande souple (2).

5. Joint selon la revendication 1, caractérisé en ce qu'il comprend une enveloppe externe constituée de deux éléments, un extérieur (5E) et un intérieur (5I) comprenant une partie centrale bombée (9E, 9I), chaque élément étant appliqué contre l'élément correspondant (2E, 2I) de la bande souple (2).

6. Joint selon la revendication 2, caractérisé en ce que l'âme métallique est réalisée sous la forme d'un jonc plein (15) déformable.

7. Joint selon l'une quelconque des revendications 1 à 6, caractérisé en ce qu'il comprend un renfort métallique extérieur (20E) appliqué à l'extérieur du joint et/ou un renfort métallique intérieur (20I) appliqué à l'intérieur du joint.

## Patentansprüche

1. Ultraweiche ringförmige statische Dichtung zur Sicherung der Dichtheit zwischen zwei Medien, in denen unterschiedliche Drücke und Temperaturen herrschen, wobei diese beiden Medien alle beide durch zwei durch einen Raum (13) getrennte Wände abgegrenzt werden und die Dichtung dabei wenigstens umfasst:
- einen weichen bzw. nachgiebigen Streifen (2) von bestimmter Breite, größer als die Breite des genannten Raums und in sich selbst geschlossen, um selbst einen Ring zu bilden; und
- eine steife Außenhülle, die den nachgiebigen Streifen (2) an seinem Mittelteil (6I, 6E) umgibt und dabei dessen beiden Abdichtungsenden (7I, 7E) freilässt, um diesen letzteren bei dem Anbringen der Dichtung in dem Raum (13) Verformungen durch Abplattung bzw. Abflachung dieser beiden Abdichtungsenden (7I, 7E) zu ermöglichen,
**dadurch gekennzeichnet**,
dass der nachgiebige Streifen durch zwei Elemente gebildet wird, ein äußeres (2E) und ein inneres (2I), von denen jedes einen gewölbten Mittelteil (6E, 6I) hat, mit dem es auf seiner Seite eine Hälfte einer steifen Innenhülle (4) umgibt, wobei beide sich an ihren Enden (7I, 7E) wieder zusammenfügen, um die beiden Abdichtungsenden des nachgiebigen Streifens zu bilden,
und dadurch, dass die Außenhülle durch zwei Elemente gebildet wird, ein äußeres und ein inneres, von denen jedes einen gewölbten Mittelteil aufweist, wobei jedes Element auf dem entsprechenden Element des nachgiebigen Streifens angebracht wird.

2. Dichtung nach Anspruch 1, dadurch gekennzeichnet, dass sie einen verformbaren metallischen Kern (3, 15) umfasst.

3. Dichtung nach Anspruch 2, dadurch gekennzeichnet, dass der metallische Kern durch eine Feder (3) gebildet wird.

4. Dichtung nach Anspruch 2, dadurch gekennzeichnet, dass die steife Innenhülle (4) um den metallischen Kern (3) herum angebracht ist, innerhalb des nachgiebigen Streifens (2).

5. Dichtung nach Anspruch 1, dadurch gekennzeichnet, dass sie eine Außenhülle umfasst, die durch zwei Elemente gebildet wird, ein äußeres (5E) und ein inneres (5I), von denen jedes einen gewölbten Mittelteil (9E, 9I) aufweist, wobei jedes Element auf dem entsprechenden Element (2E, 2I) des nachgiebigen Streifens (2) angebracht ist.

6. Dichtung nach Anspruch 2, dadurch gekennzeichnet, dass der metallische Kern in Form eines verformbaren vollen Rings (15) realisiert ist.

7. Dichtung nach einem der Ansprüche 1 bis 6, dadurch gekennzeichnet, dass sie eine an der Außenseite der Dichtung angebrachte metallische Außenverstärkung (20E) und/oder eine an der Innenseite der Dichtung abgebrachte metallische Innenverstärkung (20I) umfasst.

## Claims

1. Toric, ultraflexible gasket intended to ensure imperviousness between two media, where different temperatures and pressures prevail, said two media being delimited by two walls separated by a space (13), the gasket including at least:
- a flexible strip (2) of given width, which is wider than the width of said space and is closed on itself so as to form a ring and
- a rigid outer casing surrounding and maintaining in place the flexible strip in its central portion (6i, 6e), whilst leaving free the two sealing ends (7i, 7e) thereof, so as to permit the latter to deform during the putting into place of the gasket in space (13) by flattening said two sealing ends (7i, 7e),
characterized in that the flexible strip is constituted by two elements, an outer element (2e) and an inner element (2i), each having a bulged central portion (6e, 6i), so that each surrounds half of a rigid inner casing (4) and joined at their ends (7i, 7e) so as to constitute the two sealing ends of the flexible strip and in that the outer casing is constituted by two elements, an outer element and an inner element, each comprising a bulged, central portion, each element being applied to the corresponding element of the flexible strip.

2. Gasket according to claim 1, characterized in that it comprises a deformable, metal core (3, 15).

3. Gasket according to claim 2, characterized in that the metal core is constituted by a spring (3).

4. Gasket according to claim 2, characterized in that the rigid inner casing (4) is placed around the metal core (3), within the flexible strip (2).

5. Gasket according to claim 1, characterized in that it comprises an outer casing constituted by two elements, an outer element (5e) and an inner element (5i), each having a central, bulged portion (9e, 9i), each element being applied against the corresponding element (2e, 2i) of the flexible

6. Gasket according to claim 2, characterized in that the metal core is in the form of a deformable, solid retainer ring (15).

7. Gasket according to any one of the claims 1 to 6, characterized in that it comprises an outer, metallic reinforcing piece (20e) applied to the exterior of the gasket and/or an inner, metallic reinforcer piece (20i) applied to the interior of the gasket.
